# EUROPÄISCHE PATENTSCHRIFT

(11) **EP 0 216 045 B1**
(45) Veröffentlichungstag und Bekanntmachung des Hinweises auf die Patenterteilung: **13.01.1993**
(21) Anmeldenummer: 86109739.2
(22) Anmeldetag: 16.07.1986
(51) Int. Cl.: B41F 21/04

(54) **Kupplung in einer Bogenrotationsdruckmaschine**
Clutch in a rotary sheet-printing machine
Accouplement dans une rotative d'impression de feuilles

(30) Priorität: 27.09.1985 DE 3534488
(43) Veröffentlichungstag der Anmeldung: 01.04.1987
(73) Patentinhaber: Koenig & Bauer Aktiengesellschaft, 97080 Würzburg (DE)
(72) Erfinder: Wieland, Erich Georg, D-8700 Würzburg (DE); Spiess, Wolfgang Carlo Johannes, D-8700 Würzburg 26 (DE)

(56) Entgegenhaltungen:
- DE-A- 2 901 236
- FR-A- 765 330
- FR-A- 2 058 463
- GB-A- 2 142 908
- US-A- 2 268 509
- US-A- 4 457 231
- PATENT ABSTRACTS OF JAPAN, Band 7, Nr. 165 (M-230)[1310], 20. Juli 1983; JP-A-58 71 163 (KOMORI INSATSU KIKAI K.K.) 27-04-1983
- PATENT ABSTRACT OF JAPAN, Band 7, Nr. 177 (M-233)[1322], 5. August 1983; JP-A-58 78 763 (KOMORI INSATSU KIKAI K.K.) 12-05-1983

## Beschreibung

Die Erfindung betrifft eine Vorrichtung zur Verklemmung zweier Zahnräder einer Bogenübergabetrommel einer formatvariablen von Schön- auf Schön- und Widerdruck umstellbaren Bogen-Rotationsdruckmaschine gemäß dem Oberbegriff des Patentanspruchs 1.

Bei von Schön- auf Widerdruck umstellbaren und auf verschiedene Formate einstellbaren Bogen-Rotationsdruckmaschinen ist eine Einstelleinrichtung bei Bogenübergabetrommeln erforderlich, mit der Bogentransporteinrichtungen, wie z. B. Greifer, auf verschiedene Papierformate und Betriebsarten der Druckmaschine eingestellt werden können. So zeigt z. B. die US-PS 44 57 231 eine derartige Einrichtung, die ein mit einem Bund versehenes Zahnrad aufweist, auf dem ein Zahnkranz angebracht ist. Dieser Zahnkranz wird durch Klemmplatten axial an das Zahnrad angepreßt. Die Klemmplatten werden durch Federn und / oder zweiarmige Hebel, die auf Bolzen wirken, die mit den Klemmplatten verbunden sind, an einer Seite des Zahnkranzes angedrückt. Durch Lösen einer zentralen Schraube, die mit einem Bund versehen ist, werden die Klemmplatten von der Flanke des Zahnkranzes gelöst. Der Zahnkranz, der mit einem Zahnrad einer ersten Druckeinheit kämmt, wird soweit gedreht, bis die erforderliche Einstellung erfolgt ist. Durch Eindrehen der zentralen Schraube wird der Zahnkranz durch die Klemmplatten an das Zahnrad angepreßt.

Nachteilig an der oben gezeigten Verstelleinrichtung ist, daß ein Lösen oder Feststellen des Zahnkranzes nach einer Verstellung der Bogenwendetrommel ein Werkzeug erfordert. Die zentrale Feststellschraube muß während des Betriebes der Druckmaschine ständig unter Spannung gehalten werden. Es ist möglich, daß durch Materialermüdung im Schraubengewinde mit zunehmender Betriebsdauer die auf den Zahnkranz aufgebrachte Klemmkraft und damit das übertragbare Drehmoment nachläßt und damit eine passerhaltige Bogenübergabe gefährdet ist. Ein weiterer Nachteil der zentralen Feststellschraube besteht in der leichten Möglichkeit einer Beschädigung ihres Gewindes in der Antriebswelle. Eine erforderliche Reparatur würde hohe Produktionsausfallzeiten mit sich bringen.

Die GB-A-21 42 908 zeigt eine Wendetrommel mit zwei, koaxial angeordneten Zahnrädern, die mittels pneumatisch oder hydraulisch betätigter Hebel miteinander verklemmbar sind. Nachteilig ist die Verwendung von Tellerfedern um die beiden Zahnkränze gegeneinander zu pressen. Die Klemmung der zwei Zahnräder wird durch die Einwirkung eines fernbetätigbaren Hydraulik/Pneumatik-zylinders aufgehoben.

Der Erfindung liegt die Aufgabe zugrunde, eine in einem Antriebszahnräderzug einer von Schön- auf Widerdruck umschaltbaren, formatvariablen Bogenrotationsdruckmaschine zwischen einem auf einem Trommel- oder Zylinderzapfen angeordneten Zahnrad und einem auf einem Bund dieses Zahnrades angeordneten Hohlrad eine fernschaltbare Kupplung zu schaffen.

Die Vorteile der Erfindung liegen insbesondere darin, daß ein Lösen der Kupplung ohne Betätigung von Verbindungsmaschinenelementen möglich ist. Die Kupplung ist einfach, schnell und sicher zu bedienen und ermöglicht eine wesentliche Senkung der Rüstzeit bei einer Umstellung einer von Schön- auf Widerdruck umstellbaren, formatvariablen Bogenrotationsdruckmaschine. Die Kupplung eignet sich besonders gut als Kupplung zwischen zwei zueinander in Umfangsrichtung verstellbaren Trägereinrichtungen auf einer Bogenübergabetrommel einer auf Schön- und Widerdruck umstellbaren Bogenrotationsdruckmaschine, bei der die erste Trägereinrichtung mit steuerbaren Greifern zur Erfassung des Bogenanfangs und die zweite Trägereinrichtung mit einer steuerbaren Halteeinrichtung für das Bogenende ausgerüstet ist.

Ein Ausführungsbeispiel der Erfindung ist in der Zeichnung dargestellt und wird im folgenden näher beschrieben.

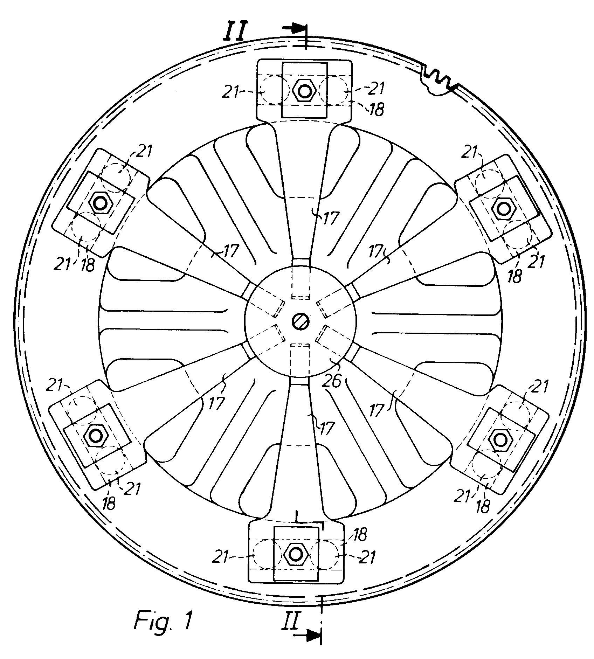

Es zeigen
- Fig. 1: eine Vorderansicht der erfindungsgemäßen Kupplung,

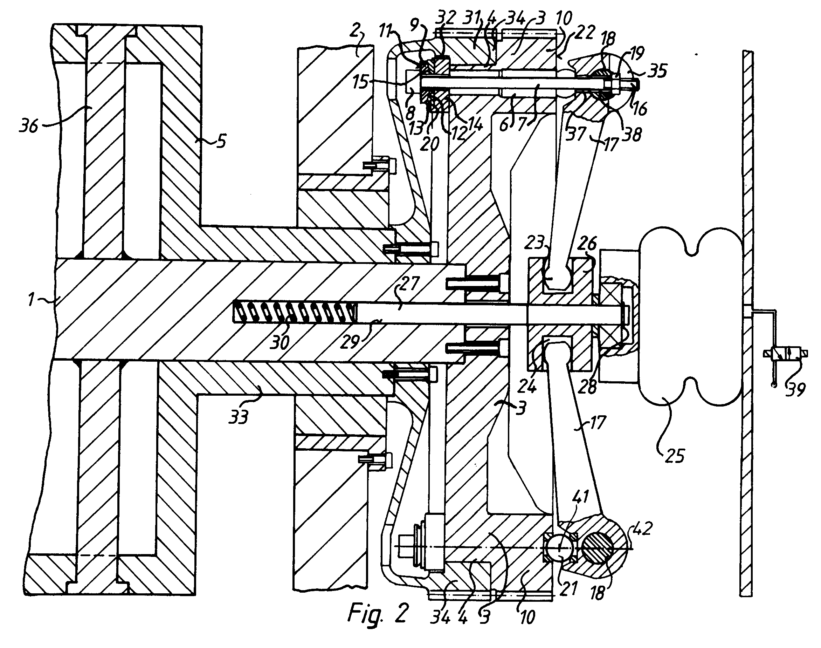

- Fig. 2: einen Schnitt II - II der erfindungsgemäßen Kupplung.

Eine Antriebswelle 1 eines Bogenübergabetrommelkörpers 5 einer Bogenübergabetrommel ist in Seitengestellen 2 gelagert. An die Antriebswelle 1 ist fliegend ein erstes Zahnrad 3 angeschraubt. Das Zahnrad 3 weist einen zum Seitengestell 2 zugewandten Bund 4 auf. Ein Zahnkranzkörper 10 weist mehrere, auf gleichem Radius liegende, gleichmäßig verteilte, zur Rotationsachse des Zahnrades 3 parallele Durchgangsbohrungen 6 auf. Durch die Durchgangsbohrungen 6 führen Zylinderschrauben 7 mit glattem Schaft. An einem Kopf 8 der Zylinderschrauben 7 liegt eine Scheibe 9 an, die eine plane, zum Kopf 8 zugewandte Fläche 11 und eine konvexe Fläche 12 hat. Die konvexe Fläche 12 liegt in einer konkaven Führungsfläche 15 einer zweiten Scheibe 13. Die Scheibe 13 lagert in einer Senkung 20 einer Spannpratze 14. Die Spannpratze 14 liegt an einer Innenseite des Zahnrades 3 an und ragt über den Bund 4 des Zahnrades 3 hinaus. Ein Gewindeende 16 der Zylinderschrauben 7 wird jeweils durch Durchgangsbohrungen 37, 38 in einarmigen, vorzugsweise abgekröpften Hebeln 17 und Lagerbolzen 18 hindurchgesteckt und mittels Muttern 19 gesichert. Die Lagerbolzen 18 sind drehbar in oberen Teilen 35 der Hebel 17 gelagert. Die Hebeln 17 stützen sich mittelbar über Kugeln 21 an einer Flanke 22 des Zahnkranzkörpers 10 ab, wobei jedoch ebenso eine unmittelbare Abstützung der Hebel 17 durchführbar wäre. Ballige untere Enden 23 der Hebel 17 sind in Sacklochbohrungen 24 eines zylinderischen Führungskörpers 26 gelenkig eingefügt. Der Führungskörper 26 ist auf eine Kolbenstange 27 eines gestellfesten, einfach wirkenden Pneumatikzylinders 25, vorzugsweise eines Balgzylinders, aufgeschrumpft. Die Kolbenstange 27 ist drehbar im Pneumatikzylinder 25 gelagert und wird mittels eines Sicherungsringes 28 mit dem Pneumatikzylinder 25 verbunden. Die Kolbenstange 27 ist in einer zentralen Sacklochbohrung 29 in der Antriebswelle 1 verschiebbar gelagert und stützt sich an einer Schraubendruckfeder 30 federnd ab.

Auf dem Bund 4 des Zahnrades 3 ist ein zweites, als Hohlrad ausgerüstetes, Zahnrad 31 verdrehbar aufgeschoben. Das Zahnrad 31 weist an seinem Hohlzahnradkörper 34 einen innen umlaufenden Bund 32 auf, in den die Spannpratzen 14 hinausragen. Das Zahnrad 31 ist mit einem ersten Hohlzapfen 3 des Bogenübergabetrommelkörpers 5 verschraubt. Der Hohlzapfen 33 ist drehbar auf der Antriebswelle 1 gelagert. Der Bogenübergabetrommelkörper 5 dient in bekannter Weise zur Aufnahme von Greifereinrichtungen für eine Bogenvorderkante. Mit der Antriebswelle 1 sind eine Mehrzahl von Tragsegmenten 36 formschlüssig verbunden. Auf ihnen sind in bekannter Weise steuerbare, mit Unterdruck beaufschlagbare Halteleisten zum Festhalten eines Bogenendes angeordnet.

Zum Lösen des Zahnrades 31 vom Zahnrad 3 wird über ein Ventil 39 der Pneumatikzylinder 25 betätigt und dadurch wird die Kolbenstange 27 entgegen einer Federkraft der Schraubendruckfeder 30 verschoben. Mittels des starr mit der Kolbenstange 27 verbundenen Führungskörpers 26 verschwenken die Hebel 17 auf den Kugeln 21 um einen Schwenkpunkt 41. Dieses bewirkt, daß die innen am Zahnrad 3 und dem Bund 32 des Zahnrades 31 mittels der Zylinderschrauben 7 angepreßten Spannpratzen 14 gelöst werden.

Zum Festsetzen von Zahnrad 3 und Hohlrad 31 wird der Pneumatikzylinder 25 drucklos gemacht. Durch Federkraft der Schraubendruckfeder 30 verschwenken die Hebel 17 um ihre Schwenkpunkte 41, so daß die Spannpratzen 14 über die Zylinderschrauben 7 an das Zahnrad 3 und den Bund 32 des Zahnrades 31 angepreßt werden. Dadurch wird das zweite Zahnrad 31 reibschlüssig mit dem Zahnrad 3 verbunden, wobei die Hebel 17 durch die Schraubendruckfeder 30 über eine Totpunktlage hinaus zur Sicherung der Klemmposition gedrückt werden. Dabei liegt der Schwenkpunkt 41 der Hebel 17 jeweils auf einer Wirkungslinie 42 einer Klemmkraft.

Das Zahnrad 3 und das Hohlrad 31 liegen in einem Zahnräderzug zwischen zwei Druckwerken der Bogenrationsdruckmaschine. Wird nun, wie oben geschrieben, die reibschlüssige Verbindung zwischen Zahnrad 3 und Zahnrad 31 augehoben, und ein Druckwerk festgesetzt, so kann mittels eines Antriebes das zweite Druckwerk zum ersten um eine vorwählbare Winkellage gedreht werden, was so sich bekannt ist. Zwar sind die Greifer- und Saugereinrichtung auf dem gleichen Bogenübergabetrommelkörper 5 montiert, jedoch folgt die Greifereinrichtung (Bogenanfang) der Bewegung des Zahnrades 31 und damit dem zweiten Druckwerk und das Zahnrad 3 und damit die Saugereinrichtung (Bogenende) der Bewegung des ersten Druckwerkes.

### Teileliste

- 1: Antriebswelle
- 2: Seitengestell
- 3: Zahnrad
- 4: Bund
- 5: Bogenübergabetrommelkörper
- 6: Durchgangsbohrungen
- 7: Zylinderschrauben
- 8: Kopf
- 9: Scheibe
- 10: Zahnkranzkörper
- 11: Fläche, plane (9)
- 12: Fläche, konvexe (9)
- 13: Scheibe
- 14: Spannpratzen
- 15: Führungsfläche, konkave
- 16: Gewindeende
- 17: Hebel, einarmige
- 18: Lagerbolzen
- 19: Mutter
- 20: Senkung
- 21: Kugeln
- 22: Flanke (3)
- 23: Enden, ballige (17)
- 24: Sacklochbohrungen
- 25: Pneumatikzylinder
- 26: Führungskörper
- 27: Kolbenstange
- 28: Sicherungsring
- 29: Sacklochbohrung
- 30: Schraubendruckfeder
- 31: Hohlzahnrad
- 32: Bund (31)
- 33: Hohlzapfen
- 34: Hohlzahnradkörper
- 35: Ende, zweites (17)
- 36: Tragsegmente, Saugereinrichtung
- 37: Durchgangsbohrung (17)
- 38: Durchgangsbohrung (18)
- 39: Ventil
- 40:
- 41: Schwenkpunkt (17)
- 42: Wirkungslinie Klemmkraft

## Patentansprüche

1. Vorrichtung zur Verklemmung zweier Zahnräder einer Bogenübergabetrommel, für die eine Antriebswelle vorgesehen ist, einer formatvariablen von Schön- auf Schön- und Widerdruck umstellbaren Bogen-Rotationsdruckmaschine, bestehend aus einer lösbaren, kraftschlüssigen Verbindung zwischen zwei koaxialen zueinander angeordneten Zahnrädern mit einer Einrichtung zur Erzeugung einer Klemmkraft zwischen den beiden Zahnrädern bestehend aus einer Anzahl von sich in radialer Richtung erstreckenden Hebeln, die sich am ersten der beiden Zahnräder abstützen und jeweils einer Spannpratze, die am zweiten Zahnrad außen anliegt, wobei Hebel und Spannpratzen jeweils mittels eines Bolzens verbunden sind, dadurch gekennzeichnet, daß die Hebel (17) als einarmige, gekröpfte Hebel ausgeführt sind und sich jeweils unmittelbar oder mittelbar an einer Flanke (22) eines ersten Zahnrades (3) abstützen, daß bei geschlossener Kupplung jeweils ein Schwenkpunkt (41) der Hebel (17) auf einer Wirkungslinie (42) der bei geschlossener Kupplung wirkenden Klemmkraft liegt, daß zum Öffnen der Kupplung ein fernschaltbarer Antrieb (25) zur Betätigung der Hebel (17) angeordnet ist.

2. Vorrichtung nach Patentanspruch 1, dadurch gekennzeichnet, daß die Hebel (17) sich auf Kugeln (21) abstützen und auf ihnen schwenkbar gelagert sind.

3. Vorrichtung nach Patentanspruch 1, dadurch gekennzeichnet, daß in einer axialen Bohrung (29) einer Antriebswelle (1) für die Tragsegmente (36) eine, sich auf einer Feder (30) abstützende Kolbenstange (27) eines Pneumatikzylinders (25) verschiebbar gelagert ist, daß mit der Kolbenstange (27) ein Führungskörper (26) zur gelenkigen Aufnahme der ersten Enden (23) der Hebel (17) verbunden ist, daß die Kolbenstange (27) drehbar an einem gestellfesten Pneumatikzylinder (25) gelagert ist.

## Claims

1. Apparatus for clamping two toothed wheels of a sheet transfer drum, for which a drive shaft is provided, of a variable-format sheet-fed rotary printing machine which can be switched between recto and verso printing, comprising a detachable non-positive connection between two mutually coaxial toothed wheels, having a device for generating a clamping force between the two toothed wheels, comprising a number of radially extending levers which are supported on the first of the two toothed wheels and in each case one clamping claw which bears outwardly against the second toothed wheel, the levers and clamping claws each being connected by means of a pin, characterized in that the levers (17) are constructed as one-arm cranked levers and are supported in each case directly or indirectly against a flank (22) of a first toothed wheel (3), in that when the coupling is closed in each case a pivot point (41) of the levers (17) lies along a line (42) of action of the clamping force acting when the coupling is closed, in that to open the coupling a remote-switchable drive (25) for actuating the levers (17) is provided.

2. Apparatus according to Claim 1, characterized in that the levers (17) are supported on balls (21) and are mounted pivotally thereon.

3. Apparatus according to Claim 1, characterized in that there is displaceably mounted in an axial bore (29) of a drive shaft (1) for the bearer segments (36) a piston rod (27), supported on a spring (30), of a pneumatic cylinder (25), in that there is connected to the piston rod (27) a guide body (26) for jointedly receiving the first ends (23) of the levers (17), in that the piston rod (27) is mounted rotatably on a pneumatic cylinder (25) fixed to a frame.

## Revendications

1. Dispositif de fixation par serrage de deux roues dentées d'un tambour de transmission des feuilles, pour l'une desquelles est prévu un arbre d'entraînement, d'une machine à imprimer rotative à format variable, pouvant être convertie de l'impression recto à l'impression recto verso, composé d'une liaison mécanique, désolidarisable, entre deux roues dentées, disposées coaxialement entre elles, avec un dispositif de production d'une force de serrage entre les deux roues dentées, composé d'une pluralité de leviers, s'étendant en direction radiale, prenant appui sur la première des deux roues dentées et chaque fois sur une griffe de serrage appuyant extérieurement sur la deuxième roue dentée, les leviers et les griffes de serrage étant chaque fois reliés au moyen d'un boulon, caractérisé en ce que les leviers (17) sont réalisés sous forme de leviers coudés à un bras et prenant chaque fois appui directement ou indirectement sur un flanc (22) d'une première roue dentée (3), en ce que, lorsque l'accouplement est fermé, le point de pivotement (41) des leviers est situé sur la ligne d'action (42) de la force agissant lorsque l'accouplement est fermé, en ce que, pour ouvrir l'accouplement, un entraînement (25) susceptible d'être mis en service à distance, est disposé pour assurer l'actionnement des leviers (17).

2. Dispositif selon la revendication 1, caractérisé en ce que les leviers (17) prennent appui sur des billes (21) et sont montés à pivotement sur celles-ci.

3. Dispositif selon la revendication 1, caractérisé en ce qu'une tige de piston (27), prenant appui sur un ressort (30), d'un vérin pneumatique (25) est montée déplaçable dans un alésage axial (29) d'un arbre d'entraînement (1) destinés aux segments support (36), en ce qu'un corps de guidage (26), destiné à recevoir de façon articulée les premières extrémités (23) des leviers (17), est relié à la tige de piston (27), en ce que la tige de piston (27) est montée à rotation sur un vérin pneumatique (25) fixé sur le bâti.
